# EUROPÄISCHE PATENTSCHRIFT

(11) **EP 1 072 540 B1**
(45) Veröffentlichungstag und Bekanntmachung des Hinweises auf die Patenterteilung: **12.02.2003**
(21) Anmeldenummer: 00113765.2
(22) Anmeldetag: 29.06.2000
(51) Int. Cl.: B65G 17/00, B23Q 7/14, B65D 19/00, B65G 35/06

(54) **Werkstückträger, insbesondere für manuelle Förderbahnen**
Workpiece carrier, especially for manual conveyors
Support de pièces, notamment pour convoyeurs manuelles

(30) Priorität: 24.07.1999 DE 19934866
(43) Veröffentlichungstag der Anmeldung: 31.01.2001
(73) Patentinhaber: ROBERT BOSCH GMBH, 70442 Stuttgart (DE)
(72) Erfinder: Neuber, Michael, 71672 Marbach A. n. (DE); Küpferle, Harald, 74385 Pleidelsheim (DE); Klemd, Olaf, 71706 Markgroeningen (DE)
(74) Vertreter: Thürer, Andreas

(56) Entgegenhaltungen:
- EP-A- 0 329 007
- DE-A- 4 036 214
- GB-A- 2 035 942
- US-A- 5 222 587
- US-A- 5 826 692

## Beschreibung

### Stand der Technik

Die Erfindung geht aus von einem Werkstückträger, insbesondere für manuelle Förderbahnen nach der Gattung des Anspruchs 1. Die Förderbahnen dienen hierbei in der Regel der Verkettung von Arbeitsplätzen. Der Werkstückträger weist eine im wesentlichen rechteckige Trägerplatte für mindestens ein Werkstück auf. Für die Werkstückträger bzw. die Trägerplatten werden preisgünstige Werkstoffe, wie zum Beispiel Preßspanplatten verwendet. Ein Problem hierbei ist, daß aufgrund der gerade verlaufenden Seitenflächen bei auf einer Förderbahn hintereinander angeordneten und sich berührenden Werkstückträger kein Vereinzeler oder keine Rücklaufsperre zwischen die Werkstückträger greifen kann. Um das Abbrechen der Ecken zu verhindern, werden diese häufig mit einem kleinen Radius verrundet, wodurch auch eventuelle Verletzungsgefahren vermindert werden. Für eine Richtungsänderung werden die Werkstückträger in der Regel über relative aufwendige Kugelrollentische geführt. Werden statt dessen Kurven eingesetzt, so reichen die genannten kleinen Radien nicht mehr aus; die Ecken der Werkstückträger werden deshalb mit großen Radien versehen, was jedoch relativ aufwendig und teuer ist. Außerdem kann es beim Aussägen von größeren Radien an Holzplatten dazu führen, daß diese nicht mehr plan sind.

Ein gattungsbildender Werkstückträger ist aus der US-A-5 826 692 bekannt. Die dort gezeigte Platte mit im Wesentlichen rechteckiger Form weist an ihren Ecken mit einem abgerundeten Außenprofil ausgestattete Reibkufen aus Kunststoff auf, die es zwei aufeinanderfolgenden Platten ermöglichen, während des Kurvenverlaufs der Antriebskette eine Relativbewegung zueinander auszuführen. Die Reibkufen stehen über die Außenkontur der Platte hervor und sind in unmittelbarer Nähe zur jeweiligen Ecke mit einem Radius versehen, der sich zwischen zwei, parallel zu den Seitenrändern der Platte verlaufenden Geradabschnitten befindet.

Der aus der US-A-5 222 587 bekannte Werkstückträger weist an seinen vier Ecken jeweils eine drehbare Rolle auf, die aus der Außenkontur des Werkstückträgers herausragt. Diese Lösung ist relativ teuer und erfordert einen hohen Montageaufwand. Zusätzlich baut der Werkstückträger höher.

### Vorteile der Erfindung

Der erfindungsgemäße Werkstückträger, insbesondere für manuelle Förderbahnen mit den kennzeichnenden Merkmalen des Hauptanspruchs hat demgegenüber den Vorteil, daß die Kanten auf einfache Art und Weise geschützt sind und daß bei auf einer Förderbahn hintereinander angeordneten Werkstückträgern ein Vereinzeler oder eine Rücklaufsperre zwischen die Werkstückträger greifen kann.

Sind Abstandshalter an den Ecken der Trägerplatte des Werkstückträgers angeordnet, sind zum einen die Ecken geschützt, zum anderen wird der Werkstückträger bei ausreichend großen Radien an den Abstandshaltern sicher durch Kurven geführt und auch Vereinzeler können noch sicher zwischen zwei Werkstückträger greifen. Zur besseren Krafteinleitung weisen die Abstandshalter im Radius zwei Schenkel auf. Verläuft durch die Abstandshalter eine Symmetrieebene, so lassen sie sich leicht an allen vier Ecken eines Werkstückträgers anbauen.

Es ist vorteilhaft, zwischen den Schenkeln eine Ausnehmung zur Aufnahme der Ecken der Trägerplatte auszubilden. Dadurch muß die Trägerplatte nicht sonderlich genau bearbeitet werden. Ragen die Schenkel über den Radius hinaus, so können sie noch einen Anschlag für einen Vereinzeler oder eine Rücklaufsperre bilden, wodurch der Verschleiß gemindert wird. Verläuft zwischen den Schenkeln eine Rippe, die auf den Eckbereichen der Trägerplatte aufliegt, so ist eine leichte Positionierung der Abstandshalter möglich. Ist in der Rippe noch eine Durchgangsbohrung für Befestigungsmittel ausgebildet, so kann der Abstandshalter ausgewechselt werden, was bei Kleben nicht möglich ist. Ferner ist es preisgünstig, die Trägerplatte aus Holz, vorzugsweise einer Preßspanplatte herzustellen und/oder die Abstandshalter als Kunststoffspritzgußteile auszubilden.

Weitere Vorteile und vorteilhafte Weiterbildungen des erfindungsgemäßen Werkstückträgers ergeben sich aus den Unteransprüchen und der Beschreibung.

### Zeichnung

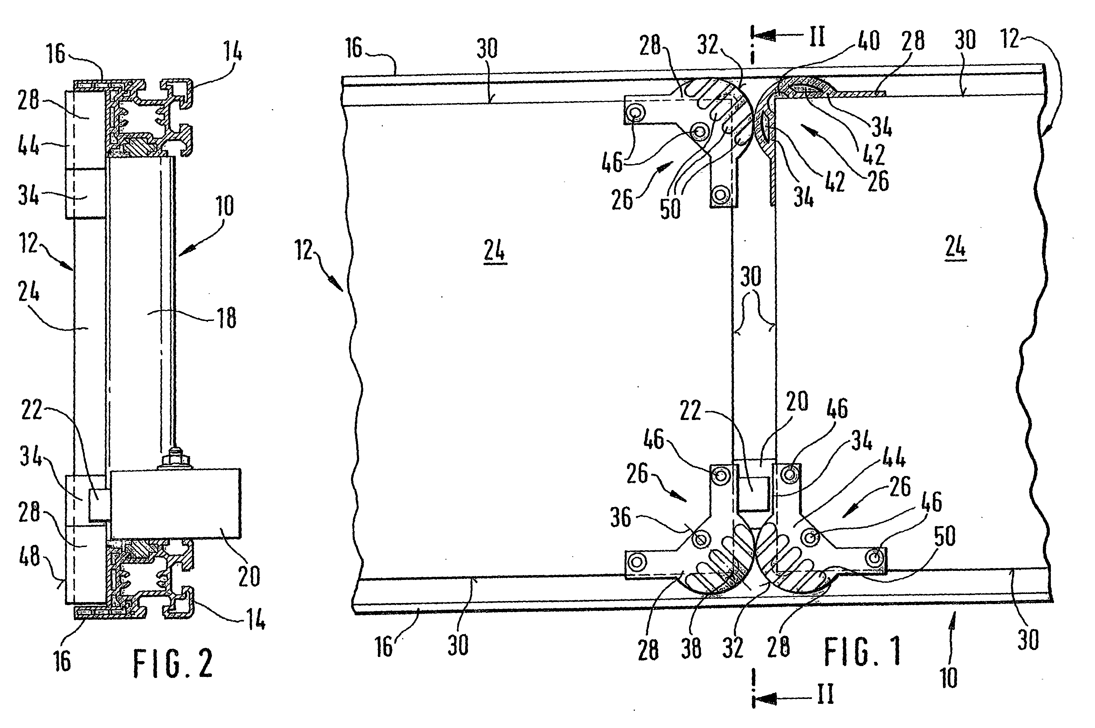

Ein Ausführungsbeispiel der Erfindung ist in der Zeichnung dargestellt und in der nachfolgenden Beschreibung näher erläutert. Es zeigen Figur 1 eine Draufsicht auf eine Förderbahn mit zwei Werkstückträgern und Figur 2 einen Schnitt durch die Figur 1 gemäß den Schnittlinien II.

### Beschreibung des Ausführungsbeispiels

In der Figur 1 ist in einer Draufsicht eine Förderbahn 10 mit zwei darauf befindlichen angedeuteten Werkstückträgern 12 gezeigt. Wie aus der Figur 2 hervorgeht, weist die Förderbahn 10 zwei parallel angeordnete Profilstangen 14 auf, an denen je eine Seitenführung 16 für die Werkstückträger 12 ausgebildet ist und zwischen denen in Bewegungsrichtung der Werkstückträger 12 hintereinander Laufrollen 18 angeordnet sind. Es handelt sich im vorliegenden Ausführungsbeispiel um eine manuelle Förderbahn 10, auf der die Werkstückträger 12 von Hand weiterbewegt werden. Es ist jedoch auch denkbar, daß eine maschinell angetriebene Förderbahn 10 verwendet wird. An einer der Profilstangen 14 ist ein Vereinzeler 20 oder eine Rücklaufsperre angebracht, der bzw. die mit einem ein- und ausfahrbaren Zapfen 22 in die Bewegungsbahn der Werkstückträger 12 greifen kann.

Die Werkstückträger 12 weisen jeweils eine im wesentlichen rechteckige, vorzugsweise quadratische, flache Trägerplatte 24 für mindestens ein nicht dargestelltes Werkstück auf. Die Trägerplatte 24 ist aus Holz, vorzugsweise einer Preßspanplatte, hergestellt. Es sind jedoch auch andere Materialien, wie zum Beispiel Kunststoff denkbar, wobei Preßspanplatten in der Regel preisgünstiger sind.

An den Ecken 26 der Trägerplatten 24 der Werkstückträger 12 sind Abstandshalter 28 angeordnet. Die Abstandshalter 28 sind zumindest an den Seitenflächen 30 der Trägerplatten 24 angeordnet sein und ragen so über die Trägerplatten 24 hinaus, daß die Trägerplatten 24 bei sich berührenden Werkstückträgern 12 beabstandet sind. Die Abstandshalter 28 ragen so weit über die Trägerplatten 24 hinaus, daß der Vereinzeler 20 mit seinem Zapfen 22 zwischen die zwei auf der Förderbahn 10 hintereinander angeordneten und sich berührenden Werkstückträgern 12 greifen kann. Es ist auch möglich, daß ein Werkstückträger 12 in Förderrichtung gesehen vorne und hinten mit Händen gefaßt und angehoben werden kann. Dadurch, daß die Abstandshalter 28 an den Ecken 26 der Trägerplatten 24 angeordnet sind, wird zusätzlich ein Abbrechen der Ecken 26 verhindert und eine eventuelle Verletzungsgefahr vermindert. Durch das Überstehen der Radien 32 lassen sich die Werkstückträger 12 ferner auch sehr gut durch Kurven führen, wodurch die Werkstückträger 12 beim Transport ihre Bewegungsrichtung beibehalten.

Die Abstandshalter 28 weisen einen um die jeweilige Ecke 26 verlaufenden, über die Trägerplatte 24 hinausragenden Radius 32 auf, der von der einen an die jeweilige Ecke 26 angrenzenden Seitenfläche 30 zu der anderen an die gleiche Ecke 26 angrenzenden Seitenfläche 30 verläuft. Die Abstandshalter 28 haben die Form eines Scheibensegments, in dessen Öffnung die Ecken 26 anordenbar sind. Dadurch ist ein guter Schutz der Ecke 26 gewährleistet. Wie aus der Zeichnung ebenfalls hervorgeht, ist der Radius 32 der Abstandshalter 28 so groß, daß der Vereinzeler 20 mit seinem Zapfen 22, wie bereits ausgeführt, zwischen die zwei sich auf der Förderbahn 10 berührenden Werkstückträgern 12 greifen kann. Hierzu weist jeder Abstandshalter 28 im Radius 32 zwei Schenkel 34 auf, die an den an die Ecken 26 angrenzenden Endbereiche der Seitenflächen 30 der Trägerplatte 24 aufliegen.

Die Abstandshalter 28 weisen vorzugsweise eine Symmetrieebene 36 auf, die durch den Radius 32 und den Scheitel 38 der Schenkel 34 verläuft. Im Scheitel 38 der Schenkel 34 ist vorzugsweise eine Ausnehmung 40 zur Aufnahme der Ecken 26 der Trägerplatte 24 ausgebildet. Dadurch muß die Bearbeitung der Ecken 26 nicht sehr genau sein. Die Abstandshalter 28 sind vorteilhafterweise als Kunststoffspritzgußteile ausgebildet. Deshalb sind zwischen dem Radius 32 und den Schenkeln 34 Hohlkammern 42 ausgebildet. Die Schenkel 34 ragen entlang der Seitenfläche 30, auf der sie jeweils aufliegen, über den Radius 32 hinaus. Dies hat den Vorteil, daß ein Werkstückträger 12 an einem Vereinzeler 20, der an der Profilstange 14 angeordnet ist bzw. an dessen Zapfen 22 mit einem Schenkel 34 zur Anlage kommt. Dadurch wird ein Verschleiß an der Trägerplatte 24 vermindert, da eine günstigere Krafteinleitung in die Trägerplatte 24 möglich ist. Es ist jedoch auch möglich, daß die Schenkel 34 nicht über den Radius 32 hinausragen.

Die Abstandshalter sind vorzugsweise etwas dicker als die Trägerplatten 24. Seitlich zwischen den Schenkeln 34 der Abstandshalter 28 verläuft zumindest teilweise eine flache Rippe 44 zur Auflage auf den Eckbereichen der Trägerplatte 24. Dadurch läßt sich ein Abstandshalter 28 genau auf den Ecken 26 der Trägerplatte 24 positionieren. Die Abstandshalter 28 ragen zudem auf der Seite der Trägerplatte 24, auf der ein Werkstück angeordnet ist, nur unwesentlich. Auf der anderen Seite der Trägerplatte 24 ragen die Abstandshalter 28 nicht über. Dadurch decken die Abstandshalter 28 die Seitenflächen 30 im wesentlichen über ihre ganze Höhe ab. Es ist jedoch auch möglich, daß die Abstandshalter 28 die Höhe der Seitenfläche 30 der Trägerplatte 24 nur teilweise überdecken.

Die Abstandshalter 28 können beispielsweise durch Kleben an den Trägerplatten 12 befestigt werden. Im vorliegenden Ausführungsbeispiel sind in den Rippen 44 jeweils drei Durchgangsbohrungen 46 für Befestigungsmittel ausgebildet, wobei es sich vorzugsweise um zur Aufnahme von Senkkopfschrauben ausgebildete Bohrungen 46 handelt. Es sei darauf hingewiesen, daß eine Durchgangsbohrung 36 ausreicht.

An der von der Trägerplatte 24 abgewandten Außenseite 48 der Abstandshalter 28 sind parallel zur Symmetrieebene 36 verlaufende Rillen 50 ausgebildet. Im vorliegenden Ausführungsbeispiel sind fünf Rillen 50 vorgesehen, wobei es auch mehr oder weniger sein können. Durch die Rillen 50 erhöht sich die Griffigkeit der Werkstückträger 12, was sich beim manuellen Verschieben vorteilhaft auswirkt.

Vorteilhaft bei dem Werkstückträger 12 ist, daß die Abstandshalter 28 so über die Trägerplatte 24 hinausragen, daß die Trägerplatten 24 zweier auf einer Förderbahn 10 hintereinander angeordneter und sich berührender Werkstückträger 12 beabstandet sind. Dadurch kann insbesondere ein Vereinzeler 20 zwischen die Trägerplatten 24 der Werkstückträger 12 greifen. Es ist zweckmäßig, daß die Ecken 26 durch die Abstandshalter 28 geschützt sind. Schließlich sind die Werkstückträger 12 durch die Anordnung der Abstandshalter 28 an den Ecken 26 besser für Kurven geeignet.

## Patentansprüche

1. Werkstückträger (12), insbesondere für manuelle Förderbahnen (10), der eine im wesentlichen rechteckige Trägerplatte (24) für mindestens ein Werkstück aufweist, mit an der Trägerplatte (24) angeordneten Abstandshaltern (28), die über die Trägerplatte (24) so hinausragen, daß die Trägerplatten (24) bei sich berührenden Werkstückträgern (12) beabstandet sind, wobei die Abstandshalter (28) an den Ecken (26) der Trägerplatte (24) des Werkstückträgers (12) angeordnet sind, **dadurch gekennzeichnet, daß** die Abstandshalter (28) die Form eines Scheibensegments haben, in dessen Öffnung eine Ecke (26) anordenbar ist.

2. Werkstückträger (12) nach Anspruch 1, **dadurch gekennzeichnet, daß** die Abstandshalter (28) einen um die jeweilige Ecke (26) verlaufenden, über die Trägerplatte (24) hinausragenden Radius (32) aufweisen, und daß der Radius (32) von der einen an die jeweilige Ecke (26) angrenzenden Seitenfläche (30) zu der anderen an die gleiche Ecke (26) angrenzenden Seitenfläche (30) verläuft.

3. Werkstückträger (12) nach Anspruch 2, **dadurch gekennzeichnet, daß** der Radius (32) so groß ist, daß ein Vereinzeler (20) oder eine Rücklaufsperre zwischen zwei sich auf einer Förderbahn (10) berührenden Werkstückträgern (12) greifen kann.

4. Werkstückträger (12) nach Anspruch 2 oder 3, **dadurch gekennzeichnet, daß** die Abstandshalter (28) im Radius (32) zwei Schenkel (34) aufweisen, die an den an die Ecken (26) angrenzenden Endbereichen der Seitenflächen (30) der Trägerplatte (24) aufliegen, und daß die Abstandshalter (28) vorzugsweise eine Symmetrieebene (36) aufweisen, die durch den Radius (32) und den Scheitel (38) der Schenkel (34) verläuft.

5. Werkstückträger (12) nach Anspruch 4, **dadurch gekennzeichnet, daß** zwischen den Schenkeln (34) in den Bereich des Radius (32) hinein eine Ausnehmung (40) zur Aufnahme der Ecken (26) der Trägerplatte (24) ausgebildet ist.

6. Werkstückträger (12) nach Anspruch 4 oder 5, **dadurch gekennzeichnet, daß** die Schenkel (34) entlang der Seitenfläche (30), auf der sie jeweils aufliegen, so über den Radius (32) hinausragen, daß der Werkstückträger (12) mit einem der Schenkel (34) an einem Vereinzeler (20) oder einer Rücklaufsperre zur Anlage kommt.

7. Werkstückträger (12) nach einem der Ansprüche 4 bis 6, **dadurch gekennzeichnet, daß** seitlich zwischen den Schenkeln (34) zumindest teilweise eine Rippe (44) zur Auflage auf den Eckbereichen der Trägerplatte (24) verläuft.

8. Werkstückträger (12) nach Anspruch 7, **dadurch gekennzeichnet, daß** in der Rippe (44) mindestens eine, vorzugsweise zur Aufnahme einer Senkkopfschraube geeignete Durchgangsbohrung (46) für Befestigungsmittel ausgebildet ist.

9. Werkstückträger (12) nach einem der Ansprüche 1 bis 8, **dadurch gekennzeichnet, daß** an einer von der Trägerplatte (24) abgewandten Außenseite (48) der Abstandshalter Rillen (50) ausgebildet sind.

10. Werkstückträger (12) nach einem der Ansprüche 1 bis 9, **dadurch gekennzeichnet, daß** die Trägerplatte (24) aus Holz, vorzugsweise einer Preßspanplatte hergestellt ist und/oder daß die Abstandshalter (28) als Kunststoffspritzgußteile ausgebildet sind.

## Claims

1. Work carrier (12), in particular for manual conveying tracks (10), which has an essentially rectangular carrier plate (24) for at least one workpiece, having spacers (28) which are arranged on the carrier plate (24) and which extend beyond the carrier plate (24) in such a way that the carrier plates (24) are spaced apart when work carriers (12) are in contact with one another, the spacers (28) being arranged at the corners (26) of the carrier plate (24) of the work carrier (12), **characterized in that** the spacers (28) have the form of a disc segment, in the opening of which a corner (26) can be arranged.

2. Work carrier (12) according to Claim 1, **characterized in that** the spacers (28) have a radius (32) running around the respective corner (26) and projecting beyond the carrier plate (24), and **in that** the radius (32) runs from one side surface (30) adjacent to the respective corner (26) to the other side surface (30) adjacent to the same corner (26).

3. Work carrier (12) according to Claim 2, **characterized in that** the radius (32) is so large that a separator (20) or a back stop can reach between two work carriers (12) in contact with one another on a conveying track (10).

4. Work carrier (12) according to Claim 2 or 3, **characterized in that** the spacers (28) have two legs (34) at the radius (32), and these legs (34) bear on those end regions of the side surfaces (30) of the carrier plate (24) which are adjacent to the corners (26), and **in that** the spacers (28) preferably have a plane (36) of symmetry, which runs through the radius (32) and the apex (38) of the legs (34).

5. Work carrier (12) according to Claim 4, **characterized in that** a recess (40) for accommodating the corners (26) of the carrier plate (24) is formed between the legs (34) into the region of the radius (32).

6. Work carrier (12) according to Claim 4 or 5, **characterized in that** the legs (34), along the side surface (30) on which they bear in each case, project beyond the radius (32) in such a way that the work carrier (12), with one of the legs (34), comes to bear against a separator (20) or a back stop.

7. Work carrier (12) according to one of Claims 4 to 6, **characterized in that** a rib (44) for seating on the corner regions of the carrier plate (24) runs laterally at least partly between the legs (34).

8. Work carrier (12) according to Claim 7, **characterized in that** at least one through-hole (46), preferably suitable for receiving a countersunk head screw, for fastening means is formed in the rib (44).

9. Work carrier (12) according to one of Claims 1 to 8, **characterized in that** grooves (50) are formed on an outside (48) of the spacers which is remote from the carrier plate (24).

10. Work carrier (12) according to one of Claims 1 to 9, **characterized in that** the carrier plate (24) is made of wood, preferably a pressboard, and/or **in that** the spacers (23) are designed as plastic injection mouldings.

## Revendications

1. Support de pièce (12) notamment pour des convoyeurs manuels (10), ayant une plaque de support (24) essentiellement rectangulaire pour au moins une pièce, des organes d'écartement (28) prévus sur la plaque de support (24) et dépassant de la plaque de support (24), les plaques étant écartées les unes des autres lorsque les supports de pièces (12) se touchent ;
les organes d'écartement (28) étant prévus au niveau des coins (26) de la plaque de support (24) d'un support de pièce (12),
**caractérisé en ce que**
les organes d'écartement (28) ont la forme d'un segment de disque dont l'ouverture reçoit un coin (26).

2. Support de pièce (12) selon la revendication 1,
**caractérisé en ce que**
les organes d'écartement (28) ont un rayon (32) autour de chaque coin (26) et débordant de la plaque de support (24) ; et
le rayon (32) passe de l'une des surfaces latérales (30) adjacente au coin (26) respectif jusqu'à l'autre surface latérale (30) adjacente au même coin (26).

3. Support de pièce (12) selon la revendication 2,
**caractérisé en ce que**
le rayon (32) est suffisamment grand pour qu'un séparateur (20) ou une barrière anti-retour puisse passer entre deux supports de pièce (12) qui se touchent sur le convoyeur.

4. Support de pièce (12) selon les revendications 2 ou 3,
**caractérisé en ce que**
les organes d'écartement (28) ont deux branches (34) dans le rayon (32), ces branches s'appuient contre les zones d'extrémités adjacentes au coin (26) des surfaces latérales (30) de la plaque de support (24) ; et
les organes d'écartement (28) ont de préférence un plan de symétrie (36) passant par le rayon (32) et le sommet (38) des branches (34).

5. Support de pièce (12) selon la revendication 4,
**caractérisé par**
une cavité (40) pour recevoir les coins (26) de la plaque de support (24) entre les branches (34) dans la zone du rayon (32).

6. Support de pièce (12) selon les revendications 4 ou 5,
**caractérisé en ce que**
les branches (34) dépassent le long des surfaces latérales (30) sur lesquelles elles s'appuient, au-delà du rayon (32) pour que le support de pièce (12) avec l'une des branches (34) arrive en appui contre un séparateur (20) ou une barrière anti-retour.

7. Support de pièce (12) selon l'une des revendications 4 à 6,
**caractérisé en ce que**
latéralement entre les branches (34) passe au moins partiellement une nervure (44) pour servir d'appui aux zones de coin de la plaque de support (24).

8. Support de pièce (12) selon la revendication 7,
**caractérisé en ce que**
la nervure (44) comporte au moins un perçage traversant (46) pour un moyen de fixation, ce perçage étant de préférence destiné à recevoir une vis à tête fraisée.

9. Support de pièce (12) selon l'une des revendications 1 à 8,
**caractérisé en ce que**
des rainures d'écartement (50) sont réalisées sur le côté extérieur (48) à l'opposé de la plaque de support (24).

10. Support de pièce (12) selon l'une des revendications 1 à 9,
**caractérisé en ce que**
la plaque de support (24) est en bois de préférence une plaque d'aggloméré et/ou les organes d'écartement (28) sont des pièces en matière plastique.
